# EUROPÄISCHE PATENTSCHRIFT

(11) **EP 1 407 933 B1**
(45) Veröffentlichungstag und Bekanntmachung des Hinweises auf die Patenterteilung: **30.05.2007**
(21) Anmeldenummer: 03019816.2
(22) Anmeldetag: 30.08.2003
(51) Int. Cl.: B60R 9/055, B60R 9/058

(54) **Halterungsvorrichtung, insbesondere für Dachkoffer**
Fastening device, especially for a roof box
Dispositif de fixation, en particulier pour un coffre de toit

(30) Priorität: 08.10.2002 DE 10246938
(43) Veröffentlichungstag der Anmeldung: 14.04.2004
(73) Patentinhaber: Thule GmbH, 92318 Neumarkt (DE)
(72) Erfinder: Emmerling, Alexander, 92360 Sulzbürg (DE); Deisenhofer, Siegfried, 91567 Herrieden (DE)
(74) Vertreter: Blaumeier, Jörg

(56) Entgegenhaltungen:
- DE-C- 19 526 477
- US-B1- 6 296 161

## Beschreibung

Die Erfindung bezieht sich auf eine Halterungsvorrichtung, insbesondere zur lösbaren Befestigung von Dachkoffern an auf einem Fahrzeugdach befestigten Querträgern, mit den Boden des Dachkoffers durchsetzenden, die Querträger umgreifenden und nach oben verspannbaren U-förmigen Zugbügeln, wobei die Schenkel der Zugbügel jeweils durch Klemmeelemente arretierbar sind, die mittels eines auf einem Basisträgerteil gelagerten Drehelements mit in Drehrichtung verlaufenden Keilrampen zwischen einer Freigabestellung und einer Klemmstellung für die Schenkel der Zugbügel verstellbar sind.

Bei einer derartigen, dem Oberbegriff des Anspruchs 1 entsprechenden, aus der US 6,296,161 B1 bekannt gewordenen, Hälterungsvorrichtung sind die Klemmelemente als Platten mit Öffnungen ausgebildet, die etwas größer sind als der Durchmesser der Schenkel des Zugbügels. Wenn die Platten durch Federelemente in einer Ebene senkrecht zur Längsachse der Schenkel gehaltert sind, so können diese frei in den Öffnungen der Klemmplatten verschoben werden. Werden aber die Klemmplatten durch Verdrehen des Drehelements mit den Keilrampen verkippt, so verklemmen sie sich auf den Schenkeln des Zugbolzens und verhindern somit dessen Abzugsbewegung, sodass auf diese Art und Weise die gewünschte Halterung erreicht wird. Diese Ausbildung ist nicht nur relativ aufwändig, sondern durch das Vorsehen lediglich eines Verkantens der Klemmplatten bezüglich der ansonsten glatten Schenkel der Zugbügel nicht sehr ausreißfest.

Der Erfindung liegt daher die Aufgabe zugrunde, eine Halterungsvorrichtung der eingangs genannten Art so auszugestalten, dass bei einfachem Aufbau eine sehr feste, dauerhafte und praktisch abnutzungsfreie Halterung erzielt wird, die auch sehr hohe Kräfte abfangen kann, sodass selbst bei Unfällen ein Abreißen und Wegfliegen eines Dachkoffers, mit entsprechend gefährlichen Folgen für andere Verkehrsteilnehmer, sicher vermieden ist.

Zur Lösung dieser Aufgabe ist erfindungsgemäß vorgesehen, dass die Schenkel des Zugbügels mit, vorzugsweise als Gewindeabschnitt ausgebildeten, Außenverzahnungen versehen sind, dass das Drehelement als hohler Drehgriff ausgebildet ist, in dem ein Arretierarm mit begrenztem Dreh- und Axialspiel gelagert ist, der an den Enden Gegenverzahnungsabschnitte aufweist, die beim Drehen des Drehgriffs in die Arretierstellung in die Außenverzahnungen der Schenkel eingreifen und dass die Keilrampen so ausgebildet und angeordnet sind, dass sie nach dem Eingreifen der Gegenverzahnungsabschnitte den Arretierarm unter Verspannung des Zugbügels nach oben anheben.

Durch die erfindungsgemäße Ausgestaltung ergibt sich eine wesentlich stabilere Verbindung zwischen den Schenkeln und den durch die Gegenverzahnungsabschnitte des Arretierarms gebildeten Klemmelementen, als es durch die bloße Verkippung einer Klemmplatte mit einer Öffnung, wie bei der angesprochenen Lösung des Standes der Technik, möglich ist.

Dabei kann in Ausgestaltung der Erfindung weiter vorgesehen sein, dass die Gegenverzahnungsabschnitte offene querschnittlich U-förmige Hülsen sind, in die bei der bevorzugten Ausführungsform der Schenkel mit Gewindeabschnitten entsprechende Gegengewindegänge eingeformt sind.

Gemäß einem weiteren Merkmal der Erfindung kann vorgesehen sein, dass auf einem den Arretierarm, vorzugsweise im Bereich seiner Gegenverzahnungsabschnitte, untergreifenden, mit einem Schlitz für die Schenkel des Zugbügels versehenen Bodenabschnitt des Drehgriffs oben in Drehrichtung verlaufende Keilrampen ausgebildet sind. Bei dieser Ausführungsform bleibt der Drehgriff bei seiner Verdrehung zwischen Freigabestellung und Arretierstellung immer in der gleichen axialen Position und nur der Arretierarm wird entsprechend angehoben.

Gegebenenfalls kann die Ausbildung aber auch so getroffen sein, dass auch unter dem Bodenabschnitt zusätzliche, in gleicher Richtung wie die oberen Keilrampen verlaufende, Keilrampen angeformt sind. In diesem Fall ergibt sich dann eine doppelte Anhebbewegung für den Arretierarm, einmal über die Keilrampen gegenüber dem Drehgriff und zum anderen die zusätzliche Anhebbewegung durch das Mitanheben des Drehgriffs selbst über die unteren Keilrampen.

Der Drehgriff kann beispielsweise mittels einer durchgehenden Hülse in einer, vorzugsweise ebenfalls hülsenförmigen Lagerbohrung, des Basisträgerteils drehgelagert sein, wobei die Hülse - zur Bildung des begrenzten Drehspiels - mit seitlichen Schlitzen für gegenüber der Schlitzbreite schmälere Stege an der in die Hülse eingreifenden Lagerwelle des Arretierarms versehen ist. Auch diese Lagerwelle ist im einfachsten Fall wiederum als Hülse ausgebildet. Durch diese Ausbildung kann in einfacher Weise das begrenzte Drehspiel des Arretierarms gegenüber dem Drehgriff erreicht werden, wobei das begrenzte Axialspiel in bekannter Weise durch Sprengringe oder in sonstiger Weise angeformte Eingreifbunde erzielt werden kann.

Gemäß einem weiteren Merkmal der vorliegenden Erfindung ist vorgesehen, dass der Arretierarm in der Freigabestellung von einem an einem Anschlag am Basisträgerteil angeformten Klemmarm nach unten gedrückt wird, der so ausgebildet ist, dass er den Arretierarm genau dann freigibt, wenn dieser bereits in die Außenverzahnung der Schenkel eingreift, wobei bevorzugt der Klemmarm mit einer Auflaufschräge zum Herunterdrücken des Arretierarms aus seiner angehobenen Spannstellung beim Verschwenken des Drehgriffs in die Freigabestellung versehen ist.

In der Arretierstellung ist ja der Arretierarm in Eingriff mit der Verzahnung der Schenkel des Zugbügels über die Keilrampen in einer angehobenen Stellung gegenüber dem Basisteil und damit selbstverständlich auch gegenüber den Querträgern am Fahrzeugdach angeordnet. Wird nun durch Verdrehen des Drehgriffs in die Freigabestellung - gegebenenfalls mit einer gewissen Verzögerung aufgrund des Drehspiels - der Arretierarm mit in die Freigabestellung bewegt, so muss zunächst sichergestellt werden, dass er auch anschließend in der Freigabestellung wieder in die nach unten verschobene Stellung zurückgelangt, was durch die genannten Auflaufschrägen sichergestellt ist.

Darüber hinaus ist erfindungsgemäß das begrenzte Drehspiel zwischen dem Arretierarm und dem Drehgriff so gewählt, dass der Drehgriff gegenüber dem am Anschlag arretierten Dreharm um das Freigabemaß der Keilrampen in die arretierte endgültige Freigabestellung weiter drehbar ist. Dies in Verbindung mit der genannten Auflaufschräge sichert die Rückholbewegung des Arretierarms in der Freigabestellung in die am weitesten zum Basisträgerteil hin verschobene Authentifizierungsgangsstellung, die notwendig ist, damit in dieser tiefen Ausgangsstellung der Arretierarm in die Verzahnungen der Schenkel eingreifen kann und dann mit der Anhebbewegung diese Schenkel mit nach oben anheben kann.

Um ein selbsttätiges Rückverschwenken des Arretierhebels aus der Arretierstellung sicher zu verhindern, soll wenigstens ein, von Hand lösbarer Schwenkverriegelungshebel am Drehgriff angeordnet sein, der unter Übergreifen einer Schulter des Basisträgerteils die Verdrehung aus der Arretier- in die Freigabestellung blockiert. Dieser Schwenkverriegelungshebel ist bevorzugt mit einer Betätigungszunge versehen, die durch eine Schräge am Basisträgerteil bequem von den Fingern ergreifbar ist, sodass der Drehbewegung des Drehgriffs auch die Entriegelung dieser Schwenkverriegelungshebel stattfinden kann.

Um zu verhindern, dass der Drehgriff weiter in die Öffnungsstellung verschwenkt wird, als es notwendig ist, damit seine Keilrampen den Arretierarm wieder freigeben, kann in weiterer Ausbildung der Erfindung ein am Basisträgerteil angeformter tiefer liegender Anschlag für den Schwenkverriegelungshebel vorgesehen sein, der mit der vorstehend bereits genannten Schulter für die Verriegelung der Arretierstellung, über eine Schrägrampe verbunden ist.

In diesem Zusammenhang kann noch eine weitere Drehbegrenzung erreicht werden, indem der Schwenkverriegelungshebel in der Freigabestellung des Drehgriffs durch Einrasten in eine Ausnehmung vor dem Anschlag auch eine, durch Überwinden einer vorgebbaren Federkraft lösbare, Verriegelung der Drehbewegung in die Arretierstellung des Drehgriffs bewirkt. Soll der Dachkoffer auf dem Querträger eines Fahrzeugs befestigt werden, so wird zunächst ein Zugbügel unten durch das Basisteil durchgesteckt. Anschließend wird der Drehgriff aus der Freigabestellung unter Überwindung der genannten Federkraft, die zum Anheben des Schwenkverriegelungshebels aus der Ausnehmung vor dem Anschlag notwendig ist, in die Arretierstellung verdreht, wobei nach dem kurzen Drehspiel zwischen Drehgriff und Arretierarm der Arretierarm mitgenommen wird. Sobald der Arretierarm in die Außenverzahnung der Schenkel eingreift, gelangt er außer Eingriff mit dem Klemmarm seines Anschlags, sodass er sich bei der gleichzeitig stattfindenden Aufwärtsbewegung - in diesem Moment gelangen nämlich die Keilrampen unter den Klemmarm und heben ihn an - unter Mitnahme des Zugbügels nach oben bewegbar ist.

In gleicher Weise kann auch ein Anschlag zur Begrenzung der Drehbewegung des Drehgriffs in die Arretierstellung vorgesehen sein, wobei dieser am einfachsten in der Weise realisiert ist, dass der Anschlag für den Arretierarm gleichzeitig einen Begrenzungsanschlag für die Rückwand des Drehgriffs bildet.

Schließlich liegt es auch noch im Rahmen der Erfindung je einen vor den den Dachkofferboden durchsetzenden Einführhülsen des Basisträgerteils für die Schenkel des Zugbügels angeordneten Anschlagbolzen für diese Schenkel zur Verhinderung eines Ausweichens beim Eingriff des Arretierarms vorzusehen. Diese Anschlagbolzen, die den Schenkeln des Zugbolzens nach dem Einstecken immer anliegen, verhindern zwar, dass diese Schenkel beim Andrücken des Arretierarms nach vorne ausweichen können, behindern aber die vertikale, also axiale, Anhebbewegung in keiner Weise, da die Verzahnungen an der glatten Oberfläche dieser Anschlagbolzen problemlos abgleiten können.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

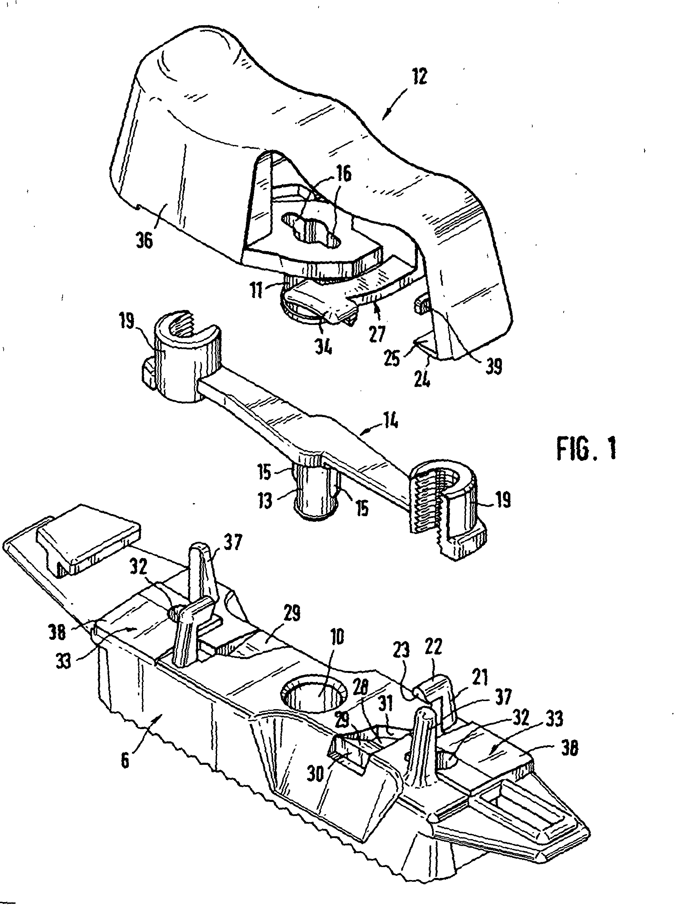

- Fig. 1: eine perspektivische Explosionsdarstellung der Teile einer erfindungsgemäßen Halterungsvorrichtung,
- Fig. 2: eine perspektivische Ansicht der zusammengebauten Halterungsvorrichtung zusammen mit einem außer Eingriffstellung dargestellten Zugbügel,
- Fig. 3: eine teilweise geschnittene Ansicht der Anordnung nach Fig. 2 in der Montagestellung mit einem Kofferboden und einem Fahrzeugquerträger in der auch in Fig. 2 gezeigten Freigabestellung,
- Fig. 4: eine der Fig. 3 entsprechende Ansicht in der Arretierstellung des Drehgriffs,
- Fig. 5: einen Querschnitt durch die Anordnung nach Fig. 4,
- Fig. 6: einen Schnitt längs der Linie VI-VI in Fig. 5,
- Fig. 7: eine auseinandergezogene Darstellung der Schnittzeichnung nach Fig. 6 unter Weglassung des Schenkels des Zugbügels und
- Fig. 8 bis 10: Teilansichten sowie ein Schnitt durch eine zweite Ausführungsform einer erfindungsgemäßen Halterungsvorrichtung.

Die erfindungsgemäße Halterungsvorrichtung zum Befestigen eines Dachkoffers mit seinem Kofferboden 1 auf einem Fahrzeugdach befestigten Querträger 2 mithilfe eines Zugbügels 3, der einen Basissteg 4 und zwei zueinander parallele Schenkel 5 aufweist, umfasst ein Basisteil 6 mit nach unten herausragenden Einführhülsen 7 zum Einführen der Schenkel 5, wobei diese Einführhülsen 7 Ausnehmungen 8 des Dachkofferbodens durchsetzen. Der Dachkofferboden 1 ist also zwischen der Unterseite des Basisträgerteils 6 und dem Querträger 2 verspannt.

In der durch eine angeformte Hülse 9 am Basisteil gebildete Lagerausnehmung 10 ist die Hülse 11 eines Drehgriffs 12 drehgelagert, in der wiederum die ebenfalls bevorzugt hülsenförmig ausgebildete Lagerwelle 13 eines Arretierarms 14 mit einem begrenzten Dreh- und Axialspiel gelagert ist, wobei Stege 15 an der Lagerwelle 13 in ihnen gegenüber breitere Schlitze 16 der Hülse 11 eingreifen. Das begrenzte Axialspiel des Arretierarms 14 gegenüber dem Drehgriff 12 ergibt sich durch den Abstand des Bundes 17 von der Schulter 18.

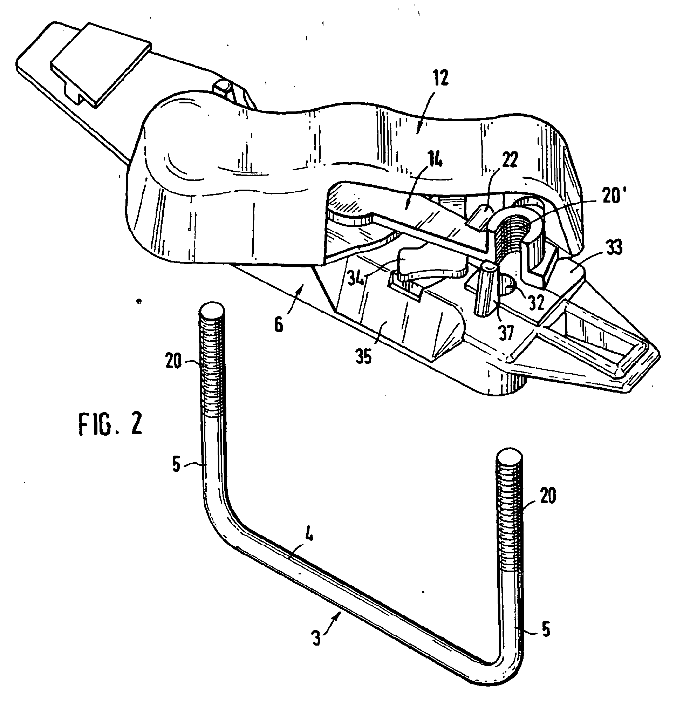

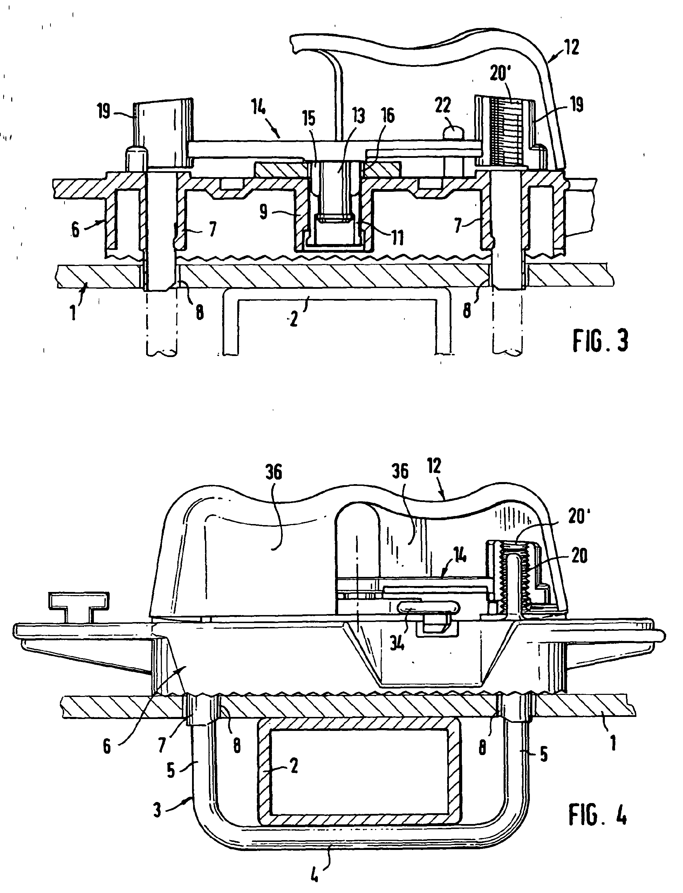

Am Arretierarm 14 sind beidends Gegenverzahnungsabschnitte 19 zum Eingreifen in die als Gewindeabschnitte ausgebildeten Außenverzahnungen 20 des Zugbügels 3 angeformt, wobei diese Gegenverzahnungsabschnitte im Querschnitt U-förmige offene Hülsen mit an der Innenseite angeordneten Gegengewindeprofil zum Gewindeprofil der Außenverzahnungen 20 sind. In der in den Fig. 2 und 3 gezeigten Öffnungsstellung des Drehgriffs untergreift der Arretierhebel 14 beidseits einen, an jeweils einem Anschlag 21 angeformten, Klemmarm 22 mit einer Auflaufschräge 23, der ihn nach unten in die Anlagestellung mit der Oberseite 33 des Basisträgerteils 6 drückt.

Ermöglicht durch das begrenzte Drehspiel zwischen dem Klemmarm 14 und dem Drehgriff 12 ist dieser Drehgriff noch etwas weiter in die Öffnungsstellung verdreht, derart, dass sein Bodenabschnitt 24 mit einer im gezeigten Ausführungsbeispiel sowohl oben als auch unten angeformten Keilrampe 25 und 26 unter dem Arretierhebel 14 herausgedreht ist, sodass beide Bauteile 14 und 12 unabhängig voneinander auf der Oberseite 33 des Basisträgerteils 6 aufsitzen.

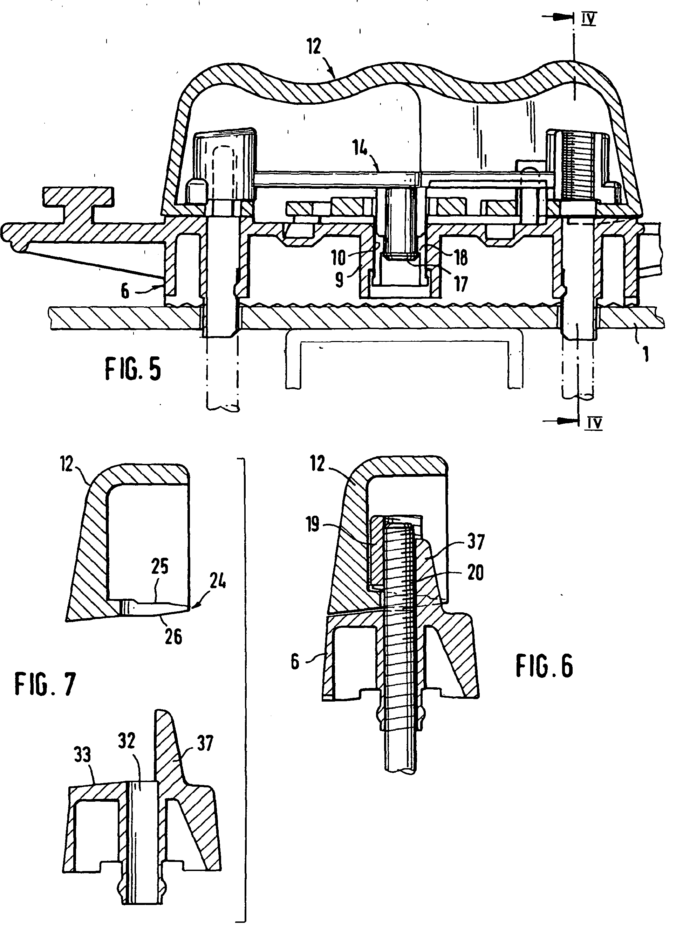

Ein am Drehgriff 12 angeformter Schwenkverriegelungshebel 27 greift in dieser Freigabestellung in eine Ausnehmung 28 des Basisträgerteils 6 ein, wodurch ein allzu leichtes Verschwenken des Drehgriffs 12 aus der Freigabestellung nach den Figuren 2 und 3 in die Arretierstellung nach den Fig. 4 und 5 verhindert ist. Erst durch Überwinden einer bestimmten Federkraft wird der Schwenkverriegelungshebel angehoben und gleitet auf einer Schrägrampe 29, wobei er nach oben angehoben wird, bis er schließlich hinter einer Schulter 30 des Basisträgerteils unter Nach-unten-Verschwenkung einrasten kann. Hinter der Ausnehmung 28 ist ein Anschlag 31 gebildet, der zusammen mit dem Schwenkverriegelungshebel 27 ein weiteres Verschwenken des Drehgriffs 12 in Öffnungsrichtung über die in Fig. 2 gezeigte Stellung hinaus verhindert.

In der in den Fig. 2 und 3 gezeigten Freigabestellung kann von unten her der Zugbügel 3 problemlos durch die in Verlängerung der Einführhülsen 7 angeordneten Öffnungen 32 des Basisträgerteils eingesteckt werden, bis er mit seinem Basisschenkel am Querträger 2 anliegt. Anschließend wird - unter Festhalten des Zugbügels - sofern nicht vorgesehen ist, dass eine leicht klemmende Halterung in den Einführhülsen für ein provisorisches Festhalten sorgt - der Drehgriff aus der Stellung nach den Fig. 2 und 3 in die Arretierstellung nach den Fig. 4 und 5 nach vorne gedreht, wobei der Arretierarm 14 dieser Schwenkbewegung - allenfalls geringfügig durch das Drehspiel verzögert - dieser Drehbewegung folgt. Dabei gleitet der Arretierarm 14 unter dem Klemmarm 22 nach vorne, wobei er diesen Klemmarm genau in dem Moment verlässt, in dem seine Innenverzahnung 20' in die Außenverzahnung 20 des jeweiligen Schenkels 5 eingreift. Nach dieser Verriegelung des Arretierarms 14 mit den Schenkeln 5 des Zugbügels ist der Arretierarm 14 an einer weiteren Drehbewegung gehindert. Der Drehgriff 12 dreht sich allerdings - ermöglicht durch das Drehspiel- weiter, wobei er durch die untere Keilrampe 26 an seinem Bodenabschnitt 24 angehoben wird. Durch diese Anhebewirkung, noch dazu durch die zweite Anhebewirkung über die Keilrampe 25 auf der Oberseite des Bodenabschnitts 24, wird der Arretierarm 14 nach oben angehoben und demzufolge auch der Zugbügel 4, der ja über die Verzahnungen fest mit dem Arretierarm 14 verbunden ist, ebenfalls nach oben verspannt. In der endgültigen Arretierstellung, in der der Drehgriff 12 parallel zum Basisträgerteil 6 angeordnet ist, rastet der Schwenkverriegelungshebel 27 vor die Schulter 30, sodass ein selbsttätiges Wieder-zurückschwenken in die Freigabestellung ausgeschlossen ist. Nur durch Anheben des Schwenkverriegelungshebels mit seiner Handbetätigungszunge 34, die durch die Abschrägung 35 des Basisträgerteils gut erreichbar ist, kann der Schwenkverriegelungshebel 27 hochgehoben und dann durch gleichzeitige Drehbewegung der Drehgriff 12 wieder in die Freigabestellung zurückgedreht werden. Bei dieser Öffnungsbewegung in Richtung Freigabestellung werden erst die Keilrampen unter dem Arretierarm 14 herausbewegt, anschließend dieser Arretierarm mitgenommen, bis er an der Auflaufschräge 23 des Klemmarms 22 anstößt, um schließlich unter den Klemmarm 22 gedrückt zu werden, sodass er in die Ausgangsstellung nach den Fig. 2 und 3 gelangt.

Die sich auf jeder Seite des Drehgriffs 12 nur über die Hälfte der gesamten Drehgrifflänge erstreckende Drehgriffrückwand 36 wird durch den Anschlag 21 an einer Verdrehung über die Arretierstellung hinaus gehindert, sodass dieser Anschlag 21 sowohl für den Arretierarm 14 als auch den Drehgriff 12 als Anschlag, wenn auch in unterschiedlicher Funktion, wirkt.

Bei 37 erkennt man zwei, am Basisträgerteil angeformte, die Durchgangsbohrung 32 zum Einsetzen des Zugbügels flankierende, Anschlagbolzen, die den Außenverzahnungen 20 der Schenkel 5 anliegen und verhindern, dass beim Verdrehen des Drehgriffs 12 in die Arretierstellung und beim Auftreffen der Gegenverzahnungsabschnitte 19 des Arretierhebels 14 die Schenkel 5 nach vorne ausweichen können. Für die Axialbewegung der Schenkel 5 stellen diese Anschlagbolzen 37 kein Hindernis dar, da die Schenkel 5 auch mit ihren Verzahnungsabschnitten problemlos an den glatten Flächen dieser Anschlagbolzen 37 abgleiten können.

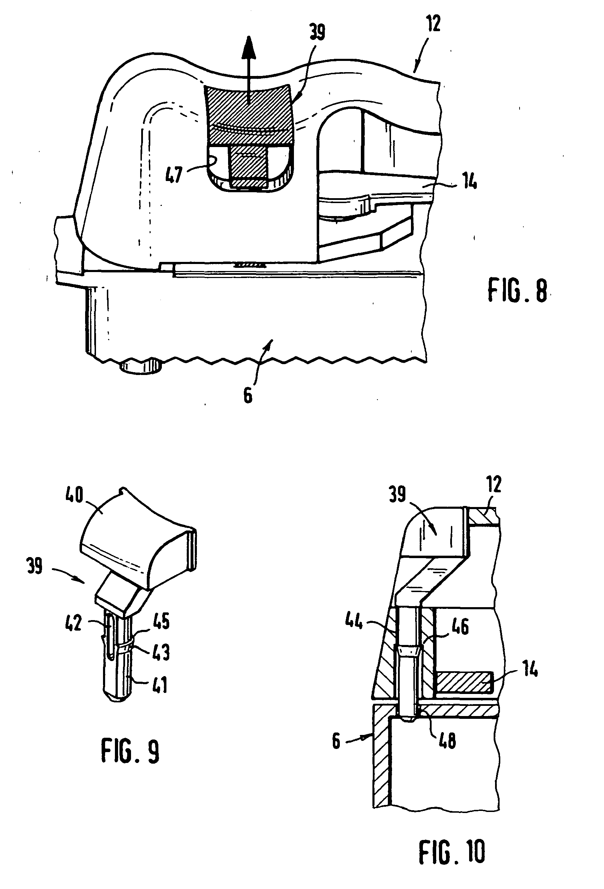

Die Arretierung des Drehgriffs 12 in der Klemmstellung ist, wegen der hohen Anforderungen an die Sicherheit und der Notwendigkeit eines absolut sicheren Verhinderns eines Lösens während der Fahrt, von ausschlaggebender Bedeutung. In den Figuren 8, 9 und 10 ist daher ein abgeändertes Ausführungsbeispiel für eine erfindungsgemäße Halterungsvorrichtung ausschnittsweise dargestellt, bei der ein zusätzlicher Sicherungszapfen 39 vorgesehen ist, der den Drehgriff 12 mit dem Basisteil 6 zusätzlich zu den bereits angesprochenen Sicherungselementen verriegelt. Der Sicherungszapfen 39 weist einen Kopf 40 und einen Schaft 41 mit einem Schlitz 42 auf, der im Bereich einer keilförmigen Verdickung 43 angeordnet ist und hier eine gewisse Elastizität gewährleistet. Beim Einstecken des Schafts 41 in die Ausnehmung 44 des Drehgriffs 12 wird der Schaft 41 mittels der keilförmigen Verdickung zusammengedrückt und federt beim vollständigen Einstecken wieder auseinander, sodass die Schulter 45 der keilförmigen Verdickung 43 hinter die Schulter 46 der Bohrung 44 gelangt und damit eine Arretierung einwirkt. Der Kopf 40 des Sicherungszapfens 39 ist in der Ausnehmung 47 des Drehgriffs 12 gleitend verschiebbar geführt. Wie man insbesondere in Fig. 10 erkennen kann, greift der Sicherungszapfen 39 mit seinem unteren Ende in eine Ausnehmung 48 des Basisteils 6 ein, wodurch die angesprochene sichere Verriegelung des Drehgriffs speziell im Fahrbetrieb gewährleistet ist.

## Patentansprüche

1. Halterungsvorrichtung, insbesondere zur lösbaren Befestigung von Dachkoffern an auf einem Fahrzeugdach befestigten Querträgern, mit den Boden des Dachkoffers durchsetzenden, die Querträger umgreifenden und nach oben verspannbaren U-förmigen Zugbügeln, wobei die Schenkel der Zug-, bügel jeweils durch Klemmeelemente arretierbar sind, die mittels eines auf einem Basisträgerteil gelagerten Drehelements mit in Drehrichtung verlaufenden Keilrampen zwischen einer Freigabestellung und einer Klemmstellung für die Schenkel der Zugbügel verstellbar sind, **dadurch gekennzeichnet, dass** die Schenkel (5) des Zugbügels (3) mit, vorzugsweise als Gewindeabschnitt ausgebildeten, Außenverzahnungen (20) versehen sind, dass das Drehelement als hohler Drehgriff (12) ausgebildet ist, in dem ein Arretierarm (14) mit begrenztem Dreh- und Axialspiel gelagert ist, der an den Enden Gegenverzahnungsabschnitte (19) aufweist, die beim Drehen des Drehgriffs (12) in die Arretierstellung in die Außenverzahnungen (20) der Schenkel (5) eingreifen und dass die Keilrampen (25, 26, 38) so ausgebildet und angeordnet sind, dass sie nach dem Eingreifen der Gegenverzahnungsabschnitte (19) den Arretierarm (14) unter Verspannung des Zugbügels (3) nach oben anheben.

2. Halterungsvorrichtung nach Anspruch 1, **dadurch gekennzeichnet, dass** die Gegenverzahnungsabschnitte (19) offene querschnittlich U-förmige Hülsen sind.

3. Halterungsvorrichtung nach Anspruch 1 oder 2, **dadurch gekennzeichnet, dass** auf einem den Arretierarm (14), vorzugsweise im Bereich seiner Gegenverzahnungsabschnitte (19), untergreifenden, mit einem Schlitz (39) für die Schenkel (5) versehenen Bodenabschnitt (24) des Drehgriffs (12) oben in Drehrichtung verlaufende Keilrampen (25) ausgebildet sind.

4. Halterungsvorrichtung nach Anspruch 3, **dadurch gekennzeichnet, dass** unter am Bodenabschnitt (24) zusätzliche in gleicher Richtung wie die oberen Keilrampen (25) verlaufende Keilrampen (26) angeformt sind.

5. Halterungsvorrichtung nach Anspruch 3 oder 4, **dadurch gekennzeichnet, dass** auf der Oberfläche (33) der Basisträgerteils (6) Keilrampen (38) ausgebildet sind.

6. Halterungsvorrichtung nach einem der Ansprüche 1 bis 5, **dadurch gekennzeichnet, dass** der Drehgriff (12) mittels einer durchgehenden Hülse (11) in einer Lagerbohrung (10) des Basisträgerteils (6) drehgelagert ist, wobei die Hülse (11) - zur Bildung des begrenzten Drehspiels - mit seitlichen Schlitzen (16) für gegenüber der Schlitzbreite schmälere Stegen (15) an der in die Hülse (11) eingreifenden Lagerwelle (13) des Arretierarms (14) versehen ist.

7. Halterungsvorrichtung nach Anspruch 6, **dadurch gekennzeichnet, dass** die Lagerwelle (13) als Hülse ausgebildet ist.

8. Halterungsvorrichtung nach einem der Ansprüche 1 bis 7, **dadurch gekennzeichnet, dass** der Arretierarm (14) in der Freigabestellung von einem an einem Anschlag (21) am Basisträgerteil (6) angeformten Klemmarm (22) nach unten gedrückt wird, der so ausgebildet ist, dass er den Arretierarm (14) dann freigibt, wenn dieser bereits in die Außenverzahnung (20) der Schenkel (5) eingreift.

9. Halterungsvorrichtung nach Anspruch 8, **dadurch gekennzeichnet, dass** der Klemmarm (22) mit einer Auflaufschräge (23) zum Herunterdrücken des Arretierarms (14) aus seiner angehobenen Spannstellung beim Verschwenken des Drehgriffs (12) in die Freigabestellung versehen ist.

10. Halterungsvorrichtung nach Anspruch 8 oder 9, **dadurch gekennzeichnet, dass** das begrenzte Drehspiel zwischen dem Arretierarm (14) und dem Drehgriff (12) so gewählt ist, dass der Drehgriff (12) gegenüber dem am Anschlag (21) arretierten Dreharm (14) um das Freigabemaß der Keilrampen (25, 26, 38) in die arretierte endgültige Feigabestellung weiterdrehbar ist.

11. Halterungsvorrichtung nach einem der Ansprüche 1 bis 10, **gekennzeichnet, durch** wenigstens einen von Hand lösbaren Schwenkverriegelungshebel (27) am Drehgriff (12), der unter Übergreifen einer Schulter (30) des Basisträgerteils (6) die Verdrehung aus der Arretier- in die Freigabestellung blockiert.

12. Halterungsvorrichtung nach Anspruch 11, **gekennzeichnet durch** einen am Basisträgerteil (6) angeformten, die Freigabestellung des Drehgriffs (12) begrenzenden, tieferliegenden Anschlag (31) für den Schwenkverriegelungshebel (27), der mit der Schulter (30) über eine Schrägrampe (29) verbunden ist.

13. Halterungsvorrichtung nach Anspruch 12, **dadurch gekennzeichnet, dass** der Schwenkverriegelungshebel (27) in der Freigabestellung des Drehgriffs (12) durch Einrasten in eine Ausnehmung (28) vor dem Anschlag (31) auch eine, durch Überwindung einer vorgebbaren Federkraft lösbare, Verriegelung der Drehbewegung in die Arretierstellung des Drehgriffs (12) bewirkt.

14. Halterungsvorrichtung nach einem der Ansprüche 1 bis 13, **gekennzeichnet durch** wenigstens einen Anschlag zur Begrenzung der Drehbewegung des Drehgriffs (12) in der Arretierstellung.

15. Halterungsvorrichtung nach Anspruch 14, **dadurch gekennzeichnet, dass** der Anschlag (21) für den Arretierarm gleichzeitig einen Begrenzungsanschlag für die Rückwand (36) des Drehgriffs (12) bildet.

16. Halterungsvorrichtung nach einem der Ansprüche 1 bis 15, **gekennzeichnet durch** einen vor den den Dachkofferboden durchsetzenden Einführungshülsen (8, 32) des Basisträgerteils (6) für die Schenkel (5) des Zugbügels (3) angeordnete Anschlagbolzen (37) für diese Schenkel (5) zur Verhinderung eines Ausweichens beim Eingriff des Arretierarms (14).

17. Halterungsvorrichtung nach einem der Ansprüche 1 bis 16, **gekennzeichnet durch** einen gesonderten, den Drehgriff (12) durchsetzenden und in eine Ausnehmung (48) des Basisteils (6) eingreifenden Sicherungszapfen (39).

## Claims

1. Mounting device, in particular for the detachable fixing of roof cases to transverse supports fixed to a vehicle roof, having U-shaped tie shackles which penetrate the bottom of the roof case, encompass the transverse supports and are braceable upwards, the arms of the tie shackles being lockable by respective clamping elements, which are displaceable between a release position and a clamping position for the arms of the tie shackles by means of a rotary element mounted on a base support part having wedge ramps extending in the rotary direction, **characterised in that** the arms (5) of the tie shackle (3) are provided with male splining (20) preferably in the form of a threaded section, **in that** the rotary element is formed as a hollow rotary handle (12), in which a locking arm (14) is mounted with limited rotary and axial play, and which has counter-splined sections (19) at the ends, which upon rotation of the rotary handle (12) into the locked position engage in the male splines (20) of the arm (5), and **in that** the wedge ramps (25, 26, 38) are so formed and arranged that after engagement of the counter-splined sections (19) they lift the locking arm (14) up, thus bracing the tie shackle (3).

2. Mounting device according to claim 1, **characterised in that** the counter-splined sections (19) are open sleeves of U-shaped cross-section.

3. Mounting device according to claim 1 or 2, **characterised in that**, at the top, wedge ramps (25) extending in the rotary direction are provided on a base section (24) of the rotary handle (12) which engages under the locking arm (14), preferably in the region of its counter-splined sections (19), and which is provided with a slot (39) for the arms (5).

4. Mounting device according to claim 3, **characterised in that** under the base section (24), additional wedge ramps (26) extending in the same direction as the upper wedge ramps (25) are integrally formed.

5. Mounting device according to claim 3 or 4, **characterised in that** on the upper face (33) of the base support part (6) wedge ramps (38) are formed.

6. Mounting device according to one of claims 1 to 5, **characterised in that** the rotary handle (12) is rotatably mounted in a bearing bore (10) of the base support part (6) by means of a through sleeve (11), which - in order to create the limited rotary play - is provided with lateral slots (16) for webs (15) which are narrower than the slot width and which are formed on the bearing shaft (13) of the locking arm (14) engaging in the sleeve (11).

7. Mounting device according to claim 6, **characterised in that** the bearing shaft (13) is formed as a sleeve.

8. Mounting device according to one of claims 1 to 7, **characterised in that** the locking arm (14) is pressed downward in the release position by the clamping arm (22), which is formed on a stop (21) on the base support part (6) and which is so formed that it releases the locking arm (14) when the same is already engaged in the male splining (20) of the arm (5).

9. Mounting device according to claim 8, **characterised in that** the clamping arm (22) is provided with a leading ramp (23) for pushing down the locking arm (14) out of its raised clamping position when the rotary handle (12) is rotated into the release position.

10. Mounting device according to one of claims 8 or 9, **characterised in that** the limited rotary play between the locking arm (14) and the rotary handle (12) is so selected that the rotary handle (12) can be rotated further relative to the rotary arm (14) locked on the stop (21) by the degree necessary for release of the wedge ramps (25, 26, 38) into the locked final release position.

11. Mounting device according to one of claims 1 to 10, **characterised by** at least one swivel locking lever (27) releasable by hand on the rotary handle (12), which by engaging over a shoulder (30) of the base support part (6) blocks rotation out of the locking into the release position.

12. Mounting device according to claim 11, **characterised by** a low-lying stop (31), which is formed on the base support part (6) and defines the release position of the rotary handle (12), for the swivel locking lever (27), which is connected to the shoulder (30) via an oblique ramp (29).

13. Mounting device according to claim 12, **characterised in that** the swivel locking lever (27) in the release position of the rotary handle (12) also effects locking of the rotary movement into the locking position of the rotary handle (12) by locating in a recess (28) in front of the stop (31), such locking being reversible by overcoming a specifiable spring force.

14. Mounting device according to one of claims 1 to 13, **characterised by** at least one stop for limiting the rotary movement of the rotary handle (12) in the locking position.

15. Mounting device according to claim 14, **characterised in that** the stop (21) for the locking arm at the same time forms a limit stop for the rear wall (36) of the rotary handle (12).

16. Mounting device according to one of claims 1 to 15, **characterised by** a stop bolt (37) for the arms (5), which bolt is disposed in front of the insertion sleeves (8, 32) of the base support part (6) for the arms (5) of the tie shackle (3), these sleeves penetrating the bottom of the roof case, in order to prevent resilient escapement when the locking arm (14) engages.

17. Mounting device according to one of claims 1 to 16, **characterised by** a separate safety catch (39) penetrating the rotary handle (12) and engaging in a recess (48) in the base part (6).

## Revendications

1. Dispositif de fixation, en particulier pour la fixation amovible de coffres de toit sur des traverses fixées sur le pavillon d'un véhicule, comportant des arceaux de traction en forme de U, qui passent à travers le fond du coffre de toit, enserrent les traverses et peuvent être tendus vers le haut, les branches des arceaux de traction étant bloquées chacune par des éléments de serrage qui, au moyen d'un élément rotatif, monté sur un élément de support de base et muni de rampes de calage orientées dans le sens de rotation, sont réglables entre une position de déblocage et une position de serrage pour les branches des arceaux de traction, **caractérisé en ce que** les branches (5) de l'arceau de traction (3) sont munies de dentures extérieures (20), réalisées de préférence sous forme de tronçons filetés, **en ce que** l'élément rotatif est réalisé sous la forme d'une poignée rotative (12) creuse, dans laquelle est logé avec un jeu rotatif et axial limité un bras de blocage (14), dont les extrémités comportent des parties à denture complémentaire (19) qui, au moment de la rotation de la poignée rotative (12) vers la position de blocage, s'engagent dans les dentures extérieures (20) des branches (5), et **en ce que** les rampes de calage (25, 26, 38) sont réalisées et disposées de telle sorte que, après l'engagement des parties à denture complémentaire (19), elles soulèvent le bras de blocage (14) vers le haut moyennant le blocage de l'arceau de traction (3).

2. Dispositif de fixation selon la revendication 1, **caractérisé en ce que** les parties à denture complémentaire (19) sont des douilles ouvertes avec une section en forme de U.

3. Dispositif de fixation selon la revendication 1 ou 2, **caractérisé en ce que** des rampes de calage (25), qui s'étendent en haut dans le sens de rotation, sont réalisées sur une partie de fond (24) de la poignée rotative (12), qui s'engage en dessous du bras de blocage (14), de préférence dans la zone de ses parties à denture complémentaire (19), et qui comporte une fente (39) pour les branches (5).

4. Dispositif de fixation selon la revendication 3, **caractérisé en ce que** des rampes de calage (26) supplémentaires, qui s'étendent dans la même direction que les rampes de calage (25) supérieures, sont formées en dessous de la partie de fond (24).

5. Dispositif de fixation selon la revendication 3 ou 4, **caractérisé en ce que** des rampes de calage (38) sont réalisées sur la face supérieure (33) de l'élément de support de base (6).

6. Dispositif de fixation selon l'une quelconque des revendications 1 à 5, **caractérisé en ce que** la poignée rotative (12) est montée rotative, au moyen d'une douille (11) traversante, dans une forure d'appui (10) de l'élément de support de base (6), la douille (11) - pour la réalisation du jeu rotatif limité - étant munie de fentes (16) latérales pour des nervures (15), plus étroites que la largeur des fentes, sur l'arbre d'appui (13) du bras de blocage (14), lequel s'engage dans la douille (11).

7. Dispositif de fixation selon la revendication 6, **caractérisé en ce que** l'arbre d'appui (13) est réalisé sous la forme d'un manchon.

8. Dispositif de fixation selon l'une quelconque des revendications 1 à 7, **caractérisé en ce que** le bras de blocage (14) est poussé vers le bas dans la position de déblocage par un bras de serrage (22), qui est formé sur une butée (21) de l'élément de support de base (6) et qui est conçu de telle sorte qu'il libère le bras de blocage (14) lorsque celui-ci engrène déjà dans la denture extérieure (20) des branches (5).

9. Dispositif de fixation selon la revendication 8, **caractérisé en ce que** le bras de serrage (22) est muni d'une rampe de contact (23) pour pousser le bras de blocage (14) vers le bas hors de sa position de serrage haute lors du pivotement de la poignée rotative (12) vers la position de déblocage.

10. Dispositif de fixation selon la revendication 8 ou 9, **caractérisé en ce que** le jeu rotatif limité entre le bras de blocage (14) et la poignée rotative (12) est choisi de telle sorte que la poignée rotative (12) peut continuer à tourner par rapport au bras de blocage (14) bloqué contre la butée (21), sur la distance de déblocage des rampes de calage (25, 26, 28) dans la position de déblocage définitive bloquée.

11. Dispositif de fixation selon l'une quelconque des revendications 1 à 10, **caractérisé par** au moins un levier de verrouillage pivotant (27) sur la poignée rotative (12), lequel peut être désolidarisé manuellement et lequel, en s'engageant au-dessus d'un épaulement (30) de l'élément de support de base (6), empêche la rotation hors de la position de blocage vers la position de déblocage.

12. Dispositif de fixation selon la revendication 11, **caractérisé par** une butée (31) plus basse pour le levier de verrouillage pivotant (27), laquelle est formée sur l'élément de support de base (6) et limite la position de déblocage de la poignée rotative (12) et laquelle est reliée à l'épaulement (30) par l'intermédiaire d'une rampe (29).

13. Dispositif de fixation selon la revendication 12, **caractérisé en ce que** le levier de verrouillage pivotant (27), dans la position de déblocage de la poignée rotative (12), provoque, moyennant un engagement dans un évidement (28) devant la butée (31), également un verrouillage du mouvement de rotation vers la position de blocage de la poignée rotative (12), lequel verrouillage peut être relâché en surmontant une force de ressort prédéfinie.

14. Dispositif de fixation selon l'une quelconque des revendications 1 à 13, **caractérisé par** au moins une butée pour limiter le mouvement de rotation de la poignée rotative (12) vers la position de blocage.

15. Dispositif de fixation selon la revendication 14, **caractérisé en ce que** la butée (21) pour le bras de blocage forme en même temps une butée de délimitation pour la paroi arrière (36) de la poignée rotative (12).

16. Dispositif de fixation selon l'une quelconque des revendications 1 à 15, **caractérisé par** un boulon de butée (37), disposé devant les douilles (8, 32) d'introduction, traversant le fond du coffre de toit, de l'élément de support de base (6) pour les branches (5) de l'arceau de traction (3), prévu pour lesdites branches (5) en vue d'empêcher une déviation lors de l'engagement du bras de blocage (14).

17. Dispositif de fixation selon l'une quelconque des revendications 1 à 16, **caractérisé par** une goupille de sécurité (39) séparée, traversant la poignée rotative (12) et s'engageant dans un évidement (48) de l'élément de base (6).
